Europäisches Patentamt

(19) European Patent Office

Office européen des brevets

(11) Publication number: **0 004 568**
A1

# EUROPEAN PATENT APPLICATION

(12)

(21) Application number: 79100693.5

(22) Date of filing: 08.03.79

(51) Int. Cl.²: **C 01 B 17/50**
C 04 B 7/04, C 01 G 49/06
C 01 F 11/08

(30) Priority: 02.04.78 EG 22978

(43) Date of publication of application:
17.10.79 Bulletin 79/21

(84) Designated Contracting States:
BE DE FR GB NL SE

(71) Applicant: Sabry, Hosein Kamel, Abdel Fattah, Dr.

Kafr El-Zayat(EG)

(84) Designated Contracting States:
BE DE FR GB NL SE

(71) Applicant: SOCIETE FINANCIERE ET INDUSTRIELLE
D'Egypte S.A.A.

Kafr El-Zayat(EG)

(84) Designated Contracting States:
BE DE FR GB NL SE

(72) Inventor: Sabry Hosein Kamel, Abdel Fattah, Dr.

Kafr El-Zayat(EG)

(74) Representative: Pirson, Jean et al,
c/o Bureau Gevers, S.A. rue de Livourne, 7 bte 1
B-1050 Brussels(BE)

(54) **Process for recovering sulphuric acid from natural gypsum or phospho-gypsum.**

(57) A method for decomposition of phospho-gypsum or natural gypsum, characterised in that it comprises mixing the said gypsum with natural sulphides in any suitable ratio and burning the resulting mixture at a temperature from 700°C to 1100°C for a period of time from 1 to 3 hours to obtain sulphur dioxide and cement clinker.

EP 0 004 568 A1

Croydon Printing Company Ltd.

"Process for recovering sulphuric acid from natural gypsum or phospho-gypsum"

This invention relates to the production of sulphuric acid from phospho-gypsum and/or natural gypsum. More particularly it relates to a new method for production of sulphur dioxide ($SO_2$), calcium oxide ($CaO$) and ferric oxide ($Fe_2O_3$) directly from a mixture of pyrite and phospho-gypsum and/or natural gypsum.

The huge quantities of gypsum ($CaSO_4.2H_2O$) produced as by-products in the production of phosphoric acid and various phosphate fertilizets are major problems in the industry of phosphate fertilizers all over the world.

The only known industrial process for the utilization of such huge quantities of phospho-gypsum is the Muller-Kuhne method which depends on the decomposition of gypsum with coal and clay and involves the reduction of gypsum to calcium sulphide which reacts with calcium sulphate to give sulphur dioxide and calcium oxide which is removed as cement through reaction with the added clay.

This method suffers many major drawbacks including inter alia, large capital investments, availability of coal and clay near the site, numerous troubles and problems of maintenance and operation.

It is an object of this invention to overcome these problems and to provide a new method for the utilization of phospho-gypsum to produce directly sulphur dioxide, calcium oxide and iron oxide, through use of pyrite.

0004568

Other objects and advantages will be apparent from or referred to in the following detailed description.

As a result of extensive experiments carried out by the inventor on the decomposition of gypsum by using natural sulphides it has been found that such natural sulphides mainly the iron pyrites may be used as decomposing agent for gypsum to produce directly $SO_2$, and mixtures of $CaO$ and $Fe_2O_3$.

Iron pyrites consist mainly of $FeS_2$ which when mixed with the phospho-gypsum or natural gypsum and resulting mixture burned at a suitable temperature for a sufficient period of time gives directly $SO_2$, $CaO$ and $Fe_2O_3$.

The factors studied in experiments of the invention included the ratio of gypsum to pyrite, the temperature of reaction and the time necessary for the decomposition. All these studies were carried out with the use of pyrite and gypsum having the following analyses. In these studies the two raw materials were well mixed and subjected to the desired conditions.

ANALYSIS OF THE USED GYPSUM

|  | Natural Gypsum | Phospho-gypsum |
|---|---|---|
|  | % | % |
| Moisture | 1.0 | 0.5 |
| CaO | 38.6 | 38.0 |
| $SO_3$ | 50.5 | 50.3 |
| $Si\ O_2$ | 1.0 | 4.3 |
| Sulphide S | --- | 1.1 |
| $Fe_2\ O_3$ | 0.7 | 3.9 |

ANALYSIS OF PYRITES (CYPRUS ORE)

|  | % |
|---|---|
| Moisture | 1.50 |
| Fe | 45.50 |
| S | 46.80 |
| $Si\ O_2$ | 5.60 |
| Pb | 0.45 |
| Cu | 0.22 |

The following tables shown the results of the studies made.

## TABLE N° 1

### Effect of temperature on decomposition of Phospho-Gypsum/Pyrite mixture 1:1 ; time : 1 Hour

| Temp., °C | Analysis of Product | | | | Decomposition |
|---|---|---|---|---|---|
| | $SiO_2$ % | CaO % | $Fe_2O_3$ % | Residual S % | % |
| 500 | 6.8 | 28.7 | 39.0 | 12.4 | 71.0 |
| 600 | 7.3 | 26.8 | 40.8 | 11.0 | 75.2 |
| 700 | 7.9 | 25.7 | 43.5 | 9.7 | 78.2 |
| 800 | 8.2 | 23.0 | 45.2 | 7.1 | 85.0 |
| 900 | 9.4 | 21.0 | 46.1 | 4.3 | 91.0 |
| 1000 | 10.4 | 20.4 | 46.8 | 3.1 | 94.0 |
| 1100 | 11.0 | 19.8 | 47.2 | 2.5 | 95.8 |

## TABLE N° 2

Effect of temperature on decomposition of natural Gypsum/Pyrite.

Mixture 1:1 ; Time : 1 Hour

| Temp., °C | Analysis of Product | | | | Decomposition % |
|---|---|---|---|---|---|
| | $SiO_2$ % | CaO % | $Fe_2O_3$ % | Residudal S % | |
| 500 | 4.5 | 28.0 | 40.0 | 12.0 | 72.0 |
| 600 | 4.6 | 25.2 | 40.8 | 11.3 | 74.6 |
| 700 | 4.8 | 22.4 | 41.5 | 9.8 | 78.7 |
| 800 | 5.0 | 20.7 | 41.9 | 8.7 | 81.9 |
| 900 | 6.4 | 19.8 | 43.2 | 5.0 | 90.0 |
| 1000 | 6.8 | 19.0 | 45.4 | 3.0 | 93.0 |
| 1100 | 7.0 | 18.4 | 47.8 | 1.96 | 97.0 |

Analysis of Product after one hour ignition at 1100°C

for Gypsum / Pyrite mixture

| Gypsum/Pyrite Ratio | Analysis of Product | | | | Decomposition |
|---|---|---|---|---|---|
| | $SiO_2$ % | CaO % | $Fe_2O_3$ % | Residual S % | % |
| 4 : 1 | 2.4 | 31.4 | 22.0 | 13.8 | 67.8 |
| 2 : 1 | 3.7 | 26.0 | 33.0 | 10.2 | 75.0 |
| 4 : 3 | 4.8 | 23.0 | 40.0 | 3.4 | 96.2 |
| 1 : 1 | 5.8 | 21.0 | 45.0 | 2.1 | 97.8 |

## TABLE N° 4 A

Effect of time and temperature on decomposition of Phospho-Gypsum/Pyrite

Mixture (1:1)

1st Hour

| Temp., °C | Analysis of Product | | | | Decomposition |
|---|---|---|---|---|---|
| | $SiO_2$ % | CaO % | $Fe_2O_3$ % | Residual S % | % |
| 800 | 6.8 | 39.0 | 21.4 | 10.3 | 87.0 |
| 900 | 8.4 | 30.0 | 42.5 | 9.0 | 89.5 |
| 1000 | 9.4 | 28.0 | 46.0 | 5.0 | 94.6 |
| 1100 | 9.6 | 23.0 | 47.0 | 2.1 | 97.7 |

## TABLE N° 4 B

### Effect of time and temperature on decomposition of Phospho-Gypsum/Pyrite mixture (1:1)

### 2nd Hour

| Temp. °C | Analysis of Product | | | | Decomposition |
|---|---|---|---|---|---|
| | $SiO_2$ % | CaO % | $Fe_2O_3$ % | Residual S % | % |
| 800 | 7.0 | 32.0 | 23.6 | 9.5 | 88.5 |
| 900 | 7.9 | 27.0 | 44.7 | 7.2 | 92.4 |
| 1000 | 8.6 | 25.0 | 48.0 | 3.6 | 96.2 |
| 1100 | 8.9 | 21.5 | 48.3 | 1.9 | 97.9 |

8

0004568

## TABLE N° 4 C

Effect of time and temperature on decomposition of Phospho-Gypsum/Pyrite

mixture (1:1)

3rd Hour

| Temp., °C | Analysis of Product | | | | Decomposition % |
|---|---|---|---|---|---|
| | $SiO_2$ % | CaO % | $Fe_2O_3$ % | Residual S % | |
| 800 | 7.4 | 30.0 | 31.8 | 7.4 | 91.0 |
| 900 | 7.7 | 26.0 | 47.1 | 5.8 | 94.0 |
| 1000 | 7.9 | 23.0 | 49.1 | 2.9 | 97.0 |
| 1100 | 8.1 | 20.0 | 49.4 | 1.5 | 98.5 |

9

0004568

<u>TABLE N° 5 A</u>

Effect of time and temperature on decomposition of natural Gypsum/Pyrite mixture (1:1)

1st Hour

| Temp., °C | Analysis of Product | | | | Decomposition % |
|---|---|---|---|---|---|
| | $SiO_2$ % | CaO % | $Fe_2O_3$ % | Residual S % | |
| 800 | 5.5 | 23.6 | 37.2 | 6.7 | 92.0 |
| 900 | 6.0 | 23.0 | 38.4 | 5.1 | 94.0 |
| 1000 | 6.8 | 22.0 | 39.0 | 4.6 | 95.5 |
| 1100 | 7.1 | 21.2 | 40.2 | 3.8 | 96.2 |

## TABLE N° 5 B

Effect of time and temperature on decomposition of natural Gypsum/Pyrite mixture (1:1)

2nd Hour

| Temp., °C | Analysis of Product | | | | Decomposition % |
|---|---|---|---|---|---|
| | $SiO_2$ % | CaO % | $Fe_2O_3$ % | Residual S % | |
| 800 | 5.7 | 23.0 | 39.0 | 4.5 | 94.7 |
| 900 | 6.2 | 22.0 | 41.0 | 3.8 | 95.8 |
| 1000 | 7.0 | 20.0 | 42.6 | 3.0 | 97.0 |
| 1100 | 7.4 | 18.6 | 45.0 | 2.4 | 97.7 |

<div align="center">

## TABLE N° 5 C

Effect of time and temperature on decomposition of natural Gypsum/Pyrite

mixture (1:1)

3rd Hour

</div>

| Temp., °C | Analysis of Product | | | | Decomposition |
|---|---|---|---|---|---|
| | $SiO_2$ % | CaO % | $Fe_2O_3$ % | Residual S % | % |
| 800 | 5.9 | 19.8 | 41.0 | 3.2 | 96.2 |
| 900 | 6.4 | 19.0 | 41.9 | 2.1 | 97.8 |
| 1000 | 7.2 | 18.5 | 44.0 | 1.8 | 98.0 |
| 1100 | 7.6 | 17.9 | 47.0 | 1.3 | 98.8 |

A careful study of the results shown in above table will reveal that the burning of a mixture of gypsum and pyrite carried out at temperatures varying from 700°C to 1100°C will give rise to decomposition yields from 78.2% to 95.8% in one hour and residual S from 9.7% to 2.5% respectively. However it is preferred to carry out the burning at temperatures from 900°C to 1100°C to achieve a decomposition yield from 91.0% to 95.8% with residual S from 4.3% to 2.5% respectively.

The suitable ratios of gypsum to pyrite may vary from 2:1 to 1:1 with the best results being obtained with ratios from 4:3 to 1:1 at a temperature of 1100°C.

The period of reaction may vary from 1 to 3 hours wherein the decomposition will attain 98.5% with a residual S of 1.5%, or 98.8% with a residual S of 1.3% for phospho-gypsum or natural gypsum respectively.

## CLAIMS

1. A method for decomposition of phospho-gypsum or natural gypsum, characterised in that it comprises: mixing the said gypsum with natural sulphides in any suitable ratio and burning the resulting mixture at a temperature from 700°C to 1100°C for a period of time from 1 to 3 hours, to obtain sulphur dioxide and cement clinker.

2. A method according to claim 1, wherein the natural sulphide is iron pyrites, and burning is carried out at a temperature from 900°C to 1100°C at a ratio between the said gypsum and the said pyrite from 2:1 to 1:1 to produce sulphur dioxide and a mixture of CaO and $Fe_2O_3$ that may be used as cement clinker, or for other purposes.

3. A method according to claim 2, wherein the sulphur dioxide produced is purified and is used for the production of sulphuric acid and the mixture of CaO and $Fe_2O_3$ is separated into its components i.e. CaO and $Fe_2O_3$ separately to be used in iron and cement industries.

European Patent
Office

**EUROPEAN SEARCH REPORT**

Application number

EP 79 10 0693

## DOCUMENTS CONSIDERED TO BE RELEVANT

| Category | Citation of document with indication, where appropriate, of relevant passages | Relevant to claim |
|---|---|---|
| | AT - B - 218 035 (ADONYI)<br>* Page 1, lines 1-45; page 2, lines 1-12; page 4, lines 18-57 *<br><br>-- | 1,2,3 |
| | FR - A - 938 244 (SMIDTH)<br>* Page 2, lines 77-105; page 3, lines 1-8; page 3, lines 72-105; page 4, lines 1-35 *<br><br>-- | 1,2 |
| | BE - A - 856 467 (VISH CHIMIKO-TECHN.)<br>* Page 3; page 9, paragraph 2; page 10, claim 10 *<br><br>-- | 1,2 |
| | FR - A - 1 011 966 (SEAILLES)<br>* Whole patent *<br><br>-- | 1 |
| | CHEMICAL ABSTRACTS, vol. 85, 1976<br>Columbus, Ohio, U.S.A.<br>MARTYNTSEV. "Production of clinker from sulfur-containing raw material"<br>abstract no. 148146c<br>& Tr. Mosk. Khim.- Tekhnol. Inst. 1974, 82, 99-100 (Russ.)<br><br>-- | 1 |
| A | DE - C - 352 125 (RHENANIA VEREIN) | |
| A | BE - A - 456 779 (METALLGES.) | |
| A | FR - A - 519 787 (VEREIN CHEM. FABR.)<br><br>---- | |

**CLASSIFICATION OF THE APPLICATION (Int. Cl.²)**

C 01 B 17/50
C 04 B 7/04
C 01 G 49/06
C 01 F 11/08

**TECHNICAL FIELDS SEARCHED (Int.Cl.²)**

C 01 B 17/50
C 04 B 7/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-06-1979 | WENDLING |

EPO Form 1503.1  06.78